Europäisches Patentamt

European Patent Office

Office européen des brevets

(19)

(11) Numéro de publication: **0 003 701**
**B1**

(12) **FASCICULE DE BREVET EUROPEEN**

(45) Date de publication du fascicule du brevet: **05.05.82**

(51) Int. Cl.³: **B 29 F 3/10**

(21) Numéro de dépôt: **79400069.5**

(22) Date de dépôt: **01.02.79**

(54) Procédé et dispositif d'extrusion d'un produit réticulé.

(30) Priorité: 02.02.78 FR 7802942

(43) Date de publication de la demande:
22.08.79 Bulletin 79/17

(45) Mention de la délivrance du brevet:
05.05.82 Bulletin 82/18

(84) Etats contractants désignés:
CH DE GB SE

(56) Documents cités:
DE - A - 2 331 986
DE - A - 2 445 698
FR - A - 1 499 714
US - A - 2 478 013
US - A - 2 528 523
US - A - 3 275 731

(73) Titulaire: **SOCIETE INDUSTRIELLE DE LIAISONS ELECTRIQUES - SILEC**
**64bis, rue de Monceau**
**F-75008 Paris (FR)**

(72) Inventeur: **Jocteur, Robert**
**17, rue de la République**
**F-77250 Moret Sur Loing (FR)**

(74) Mandataire: **Fruchard, Guy et al,**
**NOVAPAT-CABINET CHEREAU 107, boulevard Péreire**
**F-75017 Paris (FR)**

Courier Press, Leamington Spa, England.

## Procédé et dispositif d'extrusion d'un produit réticulé

La présente invention concerne un procédé et un dispositif d'extrusion d'un produit réticulé et plus particulièrement un procédé et un dispositif d'extrusion d'un isolant réticulé autour d'un câble électrique.

Il est connu dans la technique d'utiliser comme isolant pour des câbles électriques des produits réticulés chimiquement à l'aide de peroxydes, les produits réticulables étant par exemple du polyéthylène ou ses dérivés.

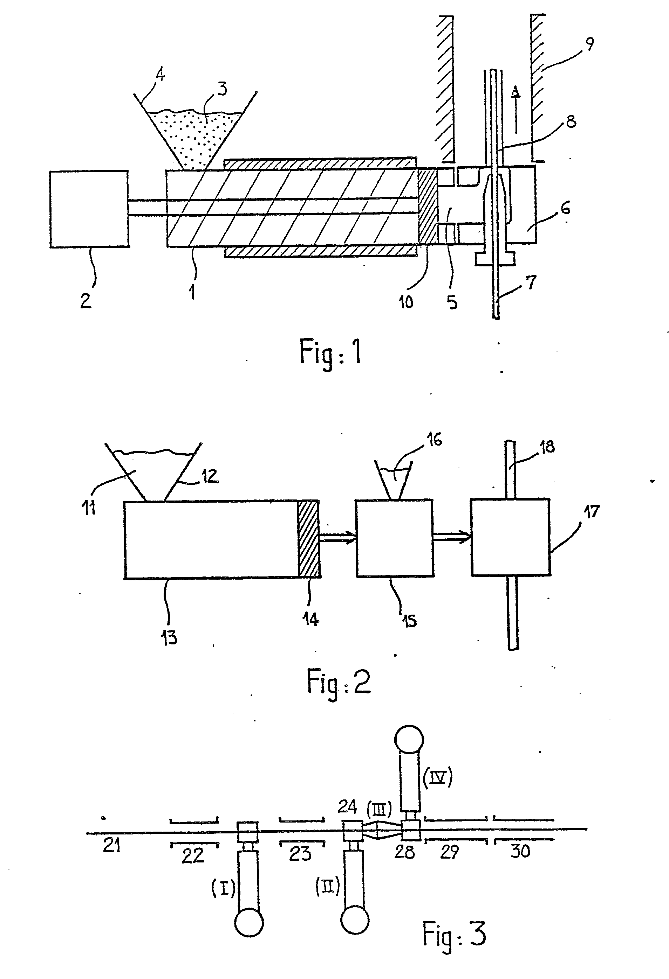

La figure 1 représente de façon très schématique une boudineuse ou extrudeuse selon l'art antérieur propre à disposer un produit réticulable sur un câble: le corps d'une boudineuse 1 comprend une vis sans fin entraînée en rotation par un moteur 2 pour diriger un mélange désiré 3 contenu dans une trémie 4 vers la sortie 5 de la boudineuse puis, via un filtre de sortie 10, vers une tête d'extrusion 6. Un revêtement de produit réticulable 8, un câble 7 passent ensuite dans un four de réticulation 9.

Initialement, le produit réticulable et son agent de réticulation étaient introduits simultanément dans la trémie d'entrée. La température à l'intérieur du corps de boudineuse devait alors être maintenue suffisamment basse pour que la réticulation ne commence pas de façon prématurée dans le corps de la boudineuse lui-même ou dans la tête, ce qui conduirait à la formation de grains et de particules hétérogènes dans le produit extrudé. Corrélativement, le filtre ou grille de sortie 10 ne pouvait pas être très fin et devait même être éventuellement supprimé en raison de la viscosité du produit d'extrusion, un filtre très fin entraînant la création de zones mortes, dans le corps de boudineuse, pouvant amorcer une préréticulation à ce niveau.

Or, un filtrage efficace s'avère très important. En effet, le produit réticulable est fourni à la trémie 4 sous forme de poudre ou de granulés, cette poudre ou ces granulés étant généralement obtenus par découpe d'un produit réticulable disponibles sous forme de tiges ou joncs. Même si le produit réticulable avant découpe ou hâchage a été purifié, il résulte de cette découpe ou de ce hâchage que de fines particules métalliques se mélangent au produit réticulable. La présence ultérieure de telles fines particules métalliques, ayant par exemple des dimensions de l'ordre de 50 à 100 microns, peut ainsi nuire de façon irrémédiable au bon isolement d'un câble. A titre d'exemple, on peut considérer que la présence d'une seule particule métallique d'une dimension de l'ordre de 100 microns dans une quantité de 1,5 tonne de polyéthylène, nécessaire pour isoler environ 800 m de câble, suffit à nuire au bon fonctionnement du câble. Il en résulte que l'on a été amené dans l'art antérieur à surdimensionner en conséquence les épaisseurs d'isolant.

La demande de brevet allemand DE 2 445 698 décrit un procédé et un dispositif d'extrusion de tuyaux on de parties tubulaires d'isolant réticulé où l'agent de réticulation est introduit immédiatement en amont de la tête d'extrusion, les températures dans la boudineuse étant déterminées pour que la réticulation s'opere juste avant la sortie de l'extrudat de la filière. Outre les problèmes d'utilisation concrète tenant à l'obtention de la réticulation à l'endroit voulu, le procédé et le dispositif décrits dans ce document n'envisagent aucunement le filtrage du matériau réticulable à extruder, ni les solutions afférentes.

Dans un autre domaine, le brevet des Etats-Unis d'Amérique n° 3.275.731 décrit un procédé d'extrusion d'un polymère cisaillé auquel est adjoint un agent ne modifiant pas la structure physique du polymère, tel qu'un colorant ou un antioxydant, cet agent étant introduit en aval d'un dispositif homogénéisateur/mélangeur et d'une zone de refroidissement et en amont d'un autre dispositif homogénéisateur/mélangeur placé avant la tête d'extrusion. Ce document ne concerne pas l'extrusion de compositions réticulables et n'envisage aucunement le filtrage du matériau à extruder.

La présente invention a pour objet de proposer un procédé et un dispositif d'extrusion d'un produit isolant réticulable, plus particulièrement autour d'un câble électrique, permettant un filtrage efficace du produit réticulable au sein de la boudineuse d'extrusion et permettant d'opérer dans des conditions voisines des conditions d'utilisation optimales pour l'extrusion et la réticulation du produit.

Pour ce faire, selon une caractéristique de l'invention, le procédé d'extrusion en continu et en milieu fermé d'un isolant réticulé, comportant les étapes de faire passer un produit isolant réticulable dans une extrudeuse chauffée et d'injecter un agent de réticulation dans le produit isolant au voisinage amont de la tête d'extrusion d'assurer un bon mélange du produit réticulable et de l'agent de réticulation; et d'augmenter la température du mélange à une température voisine de la température maximale admissible pour l'extrusion de ce mélange en vue de sa réticulation ultérieure, comprend les étapes suivantes: faire passer le produit isolant réticulable dans le corps d'extrudeuse chauffé à une température voisine de la température maximum admissible pour le produit, de l'ordre de 200°C, pour amener ce produit à l'état le plus fluide possible; filtrer le produit réticulable á cette température; refroidir le produit filtré à une température légèrement inférieure à la température de réaction de l'agent de réticulation, de l'ordre de 150°C; injecter, après refroidissement, l'agent de réticulation.

Ces objets, caractéristiques et avantages ainsi que d'autres de la présente invention seront exposés en détail dans la description ci-après de modes de réalisation particuliers, faite en relation avec les dessins annexés, sur lesquels:

La figure 1 illustre un dispositif d'extrusion suivant une technique de l'art antérieur;

La figure 2 illustre sous forme d'un bloc fonctionnel le procédé selon la présente invention;

La figure 3 illustre de façon générale une chaîne de fabrication de câble isolé;

La figure 4 illustre un mode de réalisation d'injecter selon la présente invention;

La figure 5 illustre de façon générale une chaîne d'isolement de câble incluant une variante des dispositifs selon la présente invention; et

La figure 6 illustre de façon générale une chaîne d'isolement de câble incluant une autre variante des dispositifs selon la présente invention.

La figure 1, servant à illustrer un dispositif d'extrusion d'isolant réticulable de l'art antérieur et ses inconvénients, a été décrite précédemment.

Sur la figure 2, un produit réticulable 11 est disposé dans la trémie d'entrée 12 du corps d'une boudineuse ou extrudeuse 13 (analogue à la boudineuse 1 de la figure 1).

Néanmoins, selon un aspect fondamental de la présente invention, le produit d'entrée 11 ne contient pas d'agent de réticulation tel qu'un peroxyde, mais contient uniquement le produit réticulable sous forme de poudre ou de granulés, tel que du polyéthylène ainsi qu'éventuellement des agents inhibiteurs de réticulation. Ainsi, un moyen de filtrage 14 très efficace, capable de retenir des particules solides ayant des dimensions comprises entre environ 50 et 100 $\mu$m, peut être disposé à la sortie de la boudineuse 13 du fait qu'il ne se présente plus de risque de réticulation dans le corps de boudineuse 13 ou dans des zones mortes au voisinage du filtre 14. Le moyen de filtrage 14 est constitué d'une grille sur laquelle sont disposés des éléments de filtrage. D'autre part, la température de produit réticulable à l'interieur du corps de boudineuse 13 peut être fortement élevée, voisine de la température admissible pour ce produit, ce qui assure une bonne fluidité du produit réticulable et un filtrage efficace. Le produit sortant du filtre 14 passe par un dispositif d'injection 15 au niveau duquel est injecté l'agent de réticulation tel qu'un peroxyde 16. Cet injecteur 15 permet d'une part l'injection de l'agent de réticulation 16 dans le produit réticulable, d'autre part, un bon mélange entre ce produit et cet agent ou bien par diffusion ou bien per des moyens mélangeurs comme cela sera exposé ci-après. Ensuite, la sortie de l'injecteur 15 est transmise de façon classique à une tête d'extrusion 17 pour déposer l'isolant sur le câble 18.

On obtient ainsi évidemment le premier avantage annoncé de l'invention à savoir un bon filtrage du produit réticulable juste avant son application sur le câble à isoler. On notera également que, du fait que l'agent de réticulation 16 est mélangé au produit réticulable juste avant l'introduction dans la tête d'extrusion 17, la température du mélange peut être maintenue à une valeur relativement élevée, sensiblement égale à la température de réticulation, en raison, du très court trajet du mélange dans l'injection et la tête d'extrusion. On obtient ainsi un gain sur la longueur du four de réticulation à prévoir en sortie.

La figure 3 illustre de façon schématique une chaîne de fabrication de câble comprenant:

— une machine I extrudant un produit partiellement conducteur tel qu'un polyéthylène conducteur sur l'âme du câble,

— une machine II extrudant l'isolant sans peroxyde,

— un dispositif III d'injection et de diffusion du peroxyde, et

— une machine IV extrudant le polyéthylène conducteur externe sur la couche isolante.

L'âme du câble 21 passe successivement dans un four de préchauffage 22, dans la tête de la boudineuse (I) où elle est recouverte d'une couche de polyéthylène (PE) conducteur, dans un four de maintien en température 23, puis dans la tête de la boudineuse (II). Selon l'invention, le PE isolant est introduit dans la boudineuse (II) avec ou sans antioxydant, mais, de toute façon, sans peroxyde.

L'isolant est ainsi poussé à travers la tête d'équerre 24 et, avant d'être appliqué sur le conducteur, traverse le dispositif (II) où se produisent successivement l'injection et la diffusion du peroxyde. Les formes et lest dimensions du dispositif (III) sont telles que le peroxyde puisse diffuser convenablement dans la masse de l'isolant. A titre d'exemple, la température dans le corps de la boudineuse II peut être choisie de l'ordre de 200°C; la température au niveau du dispositif d'injection III, est légèrement inférieure à la température de réaction de l'agent de réticulation, de l'ordre de 150°C, et enfin la température fournie par le four de réticulation de sortie 29 est de l'ordre de 200 à 300°C. La référence 30 désigne un moyen de refroidissement et la référence 28 la tête de la boudineuse IV extrudant le polyéthylène conducteur.

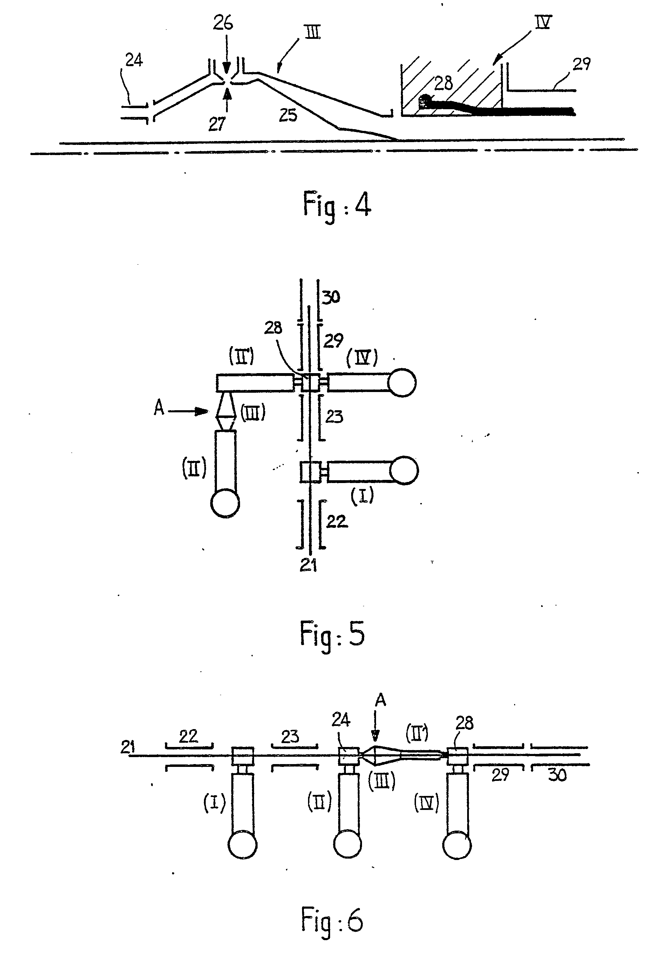

La figure 4 illustre de façon plus détaillée un mode de réalisation du dispositif d'injection III de l'agent de réticulation. La sortie de la tête d'équerre 24 illustrée en figure 3 est reliée au dispositif d'injection III.

L'injection est faite généralement dans une zone de laminage par des injecteurs 26 disposés sur une couronne à l'extérieur de la machine. Les injecteurs peuvent être ou non munis de clapets d'obturation évitant le refoulement de la matière extrudée à l'intérieur des injecteurs. Eventuellement, une injection complémentaire peut être effectuée par une couronne d'injecteurs 27 disposés à l'intérieur de l'appareil. L'isolant passe ensuite dans un diffuseur de forme appropriée 25, est mis en forme;

et traverse la tête 28 de la boudineuse (IV) qui pose le PE conducteur externe. Dans certains cas, la diffusion du mélange à base de peroxyde dans le dispositif 25 peut ne pas être suffisante pour assurer une bonne homogénéité du produit extrudé. Une homogénéisation supplémentaire peut être obtenue en plaçant dans le diffuseur 25 des chicanes ou, plus généralement, des dispositifs obligeant les filets de matière à s'interpénétrer. Dans ce cas, on peut prévoir un dispositif de refroidissement empêchant une élévation de température exagérée de la matière.

Dans une autre variante, représentée en figures 5 et 6, le dispositif utilisé pour faire diffuser le peroxyde permet d'exercer un travail mécanique encore plus important. On utilise, pour cela, une boudineuse (II') de faible longueur. L'injection du mélange à base de peroxyde se fait entre les deux boudineuse (II) et (II') en A, ou dans la zone d'alimentation de la vis de la boudineuse (II'). La disposition représentée en figure 6 évite les zones mortes dans l'écoulement, mais nécessite une boudineuse (II') possédant une vis creuse laissant passer en son centre l'âme 21 du câble.

Dans tous les cas, la composition du mélange injecté est importante pour le bon fonctionnement de l'installation. Il est souhaitable qu'au démarrage de la ligne, l'extrusion commence sans peroxyde, ce qui permet un réglage commode, sans risque de réticulation prématurée. Si l'on dispose d'injecteurs à clapets, cette opération peut se faire sans difficulté en coupant l'alimentation du mélange injecté. Sinon, il faut injecter au démarrage un liquide neutre ne contenant pas de peroxyde par exemple une huile compatible avec le polyéthyléne. Le réglage effectué, le peroxyde est injecté sans discontinuité du régime obtenu. Ce peroxyde peut être à l'état pur, mélangé à une huile support, de même nature que l'huile servant au démarrage, et/ou mélangé à un produit retardateur de la réaction de réticulation tel qu'un antioxydant. Le dosage de ce produit retardateur permet de régler la vitesse de réaction du peroxyde. Il faut noter qu'à tout moment on peut régler l'injection de peroxyde, ce qui autorise un fonctionnement souple et permet de contrôler le risque de formation de "grains" dans le diffuseur. Les températures du liquide et des parois du dispositif d'injection sont contrôlées. Leurs valeurs doivent être telles que la réaction de réticulation ne s'amorce pas avant pénétration dans la tête 28 de la boudineuse (IV).

A la sortie de la tête d'extrusion 28, le câble isolé pénètre dans la zone de réticulation 29, qui peut être constituée par l'un des dispositifs connus, mais utilisant de préférence le procédé de vulcanisation sèche, soit en atmosphère gazeuse, soit dans une filière longue. Quel que soit le procédé, la longueur de la zone de réticulation se trouve fortement diminuée par rapport à celle nécessaire actuellement. Elle peut être divisée par un facteur supérieur à 2, étant donné la température élevée de l'isolant extrudé à la sortie de la tête 28. Avec le peroxyde de dicumyle par exemple, cette température atteint 150—160°C, contre 130°C environ avec les procédés classiques. La décomposition du peroxyde, en particulier près du toron, qui aura été auparavant convenablement préchauffé, démarre donc plus vite et la réticulation de l'isolant se produit en un temps plus court qu'avec les procédés classiques.

On va maintenant indiquer divers produits pouvant être utilisés selon la présente invention mais il est clair que ces produits sont énoncés uniquement à titre d'exemple et que tous les produits actuellement connus et utilisables pour l'isolement par isolant réticulé d'un câble peuvent être utilisés selon la présente invention.

Le produit réticulable peut être du polyéthyléne ou ses dérivés.

L'agent de réticulation injecté après filtrage du produit réticulable, peut être un peroxyde organique tel que le peroxyde de dicumyle ou un mélange de peroxydes organiques ayant la propriété de provoquer la réticulation du polyéthylène et étant en plus susceptible d'être incorporé dans celui-ci à l'état liquide, soit parce que le peroxyde ou le mélange de peroxydes est liquide à la température ambiante, soit parce que le peroxyde ou le mélange de peroxydes est chauffé à une température supérieure à son point de fusion soit parce que le peroxyde ou le mélange de peroxydes est en solution dans un liquide porteur tel que de l'huile paraffinique; on rappellera d'ailleurs qu'au début d'un processus d'isolation, comme cela a été exposé précédemment, le liquide porteur peut être injecté seul pour permettre divers réglages. On pourra également ajouter au mélange destiné à fournir l'isolant réticulé, soit au niveau de l'injection du produit réticulable soit au niveau de l'injection d'agent de réticulation, un ou plusieurs inhibiteurs ou retardateurs de préréticulation.

La présente invention n'est pas limitée aux exemples de réalisation qui viennent d'être décrits, elle est au contraire susceptible de variantes et de modifications qui apparaîtront à l'homme de l'art.

**Revendications**

1. Procédé d'extrusion en continu et en milieu fermé d'un isolant réticulé, comprenant les étapes de faire passer un produit isolant réticulable dans une extrudeuse chauffée et d'injecter un agent de réticulation dans le produit isolant au voisinage amont de la tête d'extrusion,
— d'assurer un bon mélange du produit réticulable et de l'agent de réticulation; et
— d'augmenter la température du mélange á une température voisine de la température maximale admissible pour l'extrusion de ce mélange en vue de sa réticulation ultérieure.

caractérisé en ce qu'il comprend les étapes suivantes:

— faire passer le produit isolant réticulable dans le corps d'extrudeuse chauffé à une température voisine de la température maximum admissible pour le produit, de l'ordre de 200°C, pour amener ce produit à l'état le plus fluide possible;

— filtrer le produit réticulable à cette température,

— refroidir le produit filtré à une température légèrement inférieure à la température de réaction de l'agent de réticulation, de l'ordre de 150°C;

— injecter, après refroidissement, l'agent de réticulation;

2. Procédé selon la revendication 1, caractérisé en ce qu'un agent retardateur de réticulation est ajouté initialement au produit réticulable.

3. Procédé selon la revendication 1, caractérisé en ce qu'un agent retardateur de réticulation est ajouté initialement à l'agent de réticulation.

4. Procédé selon la revendication 1, caractérisé en ce que l'agent de réticulation est en solution dans un liquide porteur.

5. Procédé selon l'une quelconque des revendications 1 à 4, caractérisé en ce que le produit réticulable est du polyéthylène.

6. Procédé selon l'une quelconque des revendications 1 à 5, caractérisé en ce que l'agent de réticulation est un peroxyde organique, tel que du peroxyde de dicumyle.

7. Procédé selon la revendication 4, caractérisé en ce que le liquide porteur est une huile paraffinique.

8. Dispositif d'extrusion en continu d'isolant réticulé pour la mise en oeuvre du procédé selon l'une des revendications 1 à 7, comprenant un corps d'extrudeuse chauffé, une tête d'extrusion et un injecteur d'agent de réticulation au voisinage amont de la tête d'extrusion le mélange comprenant l'agent de réticulation étant réchauffé à une température voisine de la température maximale admissible pour l'extrusion de ce mélange en vue de sa réticulation ultérieure, caractérisé en ce qu'il comporte un moyen de filtrage (14) à la sortie du corps d'extrudeuse (13), l'injecteur d'agent de réticulation (15; III) étant agencé entre le moyen de filtrage et la tête d'extrusion (17; IV) et des moyens de refroidissement entre le moyen de filtrage et l'injecteur, les températures des différentes zones du dispositif étant respectivement réglées de façon que le corps de l'extrudeure soit chauffé à une température voisine de la température maximale admissible pour le produit, de l'ordre de 200°C pour amener ce produit à l'état le plus fluide possible, et que le produit filtré soit refroidi à une température légèrement inférieure à la température de réaction de l'agent de réticulation, de l'ordre de 150°C.

9. Dispositif selon la revendication 8, caractérisé en ce qu'il comprend des moyens mé-langers entre l'injecteur et la tête d'extrusion.

10. Dispositif selon la revendication 9, caractérisé en ce que lesdits moyens mélangeurs sont constitués d'une extrudeuse auxiliaire.

11. Dispositif selon l'une quelconque des revendications 8 et 9, caractérisé en ce que l'injecteur (III) est constitué d'un profil d'ècoulement du produit réticulable, concentrique à un câble sur lequel on veut appliquer le produit à extruder, l'injection se faisant selon au moins une couronne (26, 27) de ce profil.

**Patentansprüche**

1. Verfahren zur kontinuierlichen Extrusion eines vernetzten Isoliermaterials in einer abgeschlossenen Umgebung, das als Verfahrensschritte das Eintreten eines Isolierprodukts in einen erwärmten Extruder sowie das Einbringen eines Vernetzungsmittels in das Isolierprodukt in der Nähe des oberen Endes des Extrusionskopfes umfaßt, wobei eine gute Vermischung des vernetzbaren Produkts und des Vernetzungsmittels sichergestellt wird und die Temperatur des Gemischs auf eine Temperatur nahe des Temperatur erhöht wird, die maximal für die Extrusion dieses Gemischs im Hinblick auf die Vernetzung am Ende zulässig ist, dadurch gekennzeichnet, daß es folgende Verfahrensschritte umfaßt:

— das Eintreten des vernetzbaren Isolierprodukts in den auf eine Temperatur nahe der für das Produkt zulässigen maximalen Temperatur in der Größenordnung von 200°C erwärmten Extruderkörper, um das Produkt in einen möglichst flüssigen Zustand überzuführen;

— das Filtrieren des vernetzbaren Produkts bei dieser Temperatur;

— das Abkühlen des filtrierten Produkts auf eine Temperatur etwas unterhalb der Reaktionstemperatur des Vernetzungsmittels in der Größenordnung von 150°C;

— das Einbringen des Vernetzungsmittels nach dem Abkühlen.

2. Verfahren nach Anspruch 1, dadurch gekennzeichnet, daß ein die Vernetzung verzögerndes Mittel dem vernetzbaren Stoff zu Beginn zugesetzt wird.

3. Verfahren nach Anspruch 1, dadurch gekennzeichnet, daß ein die Vernetzung verzögerndes Mittel dem Vernetzungsmittel zu Beginn zugesetzt wird.

4. Verfahren nach Anspruch 1, dadurch gekennzeichnet, daß das Vernetzungsmittel eine Lösung in einem flüssigen Träger ist.

5. Verfahren nach einem der Ansprüche 1 bis 4, dadurch gekennzeichnet, daß das vernetzbare Produkt Polyäthylen ist.

6. Verfahren nach einem der Ansprüche 1 bis 5, dadurch gekennzeichnet, daß das Vernetzungsmittel ein organisches Peroxid, wie Dicumulperoxid, ist.

7. Verfahren nach Anspruch 4, dadurch gekennzeichnet, daß der flüssige Träger ein Paraffinöl ist.

8. Vorrichtung zur kontinuierlichen Extrusion eines vernetzten Isoliermaterials zur Durchführung des Verfahrens nach einem der Ansprüche 1 bis 7, die einen erwärmten Extruderkörper, einen Extrusionskopf und eine Einbringeinrichtung für ein Vernetzungsmittel in der Nähe des oberen Endes des Extrusionskopfes umfaßt, wobei das Gemisch, das das Vernetzungsmittel enthält, auf eine Temperatur nahe der Temperatur erhöht wird, die maximal für die Extrusion dieses Gemischs im Hinblick auf die Vernetzung am Ende zulässig ist, dadurch gekennzeichnet, daß sie eine Filtriereinrichtung (14) am Ausgang des Extruderkörpers (13) aufweist und die Einbringeinrichtung für das Vernetzungsmittel (15; III) zwischen der Filtriereinrichtung und dem Extrusionskopf (17; IV) und die Abkühleinrichtung zwischen der Filtriereinrichtung und der Einbringeinrichtung angeordnet ist, wobei die Temperaturen der verschidenen Zonen der Vorrichtung jeweils derart eingestellt werden, daß der Extruderkörper auf eine Temperatur nahe der für das Produkt zulässigen Maximaltemperatur in der Größenordnung von 200°C erwärmt wird, um das Produkt in einen möglichst flüssigen Zustand überzuführen, wobei das filtrierte Produkt auf eine Temperatur etwas unterhalb der Reaktionstemperatur des Vernetzungsmittels in der Größenordnung von 150°C abgekühlt wird.

9. Vorrichtung nach Anspruch 8, dadurch gekennzeichnet, daß sie eine Mischeinrichtung zwischen der Einbringeinrichtung und dem Extrusionskopf aufweist.

10. Vorrichtung nach Anspruch 9, dadurch gekennzeichnet, daß die Mischeinrichtung aus einem Hilfsextruder besteht.

11. Vorrichtung nach einem der Ansprüche 8 und 9, dadurch gekennzeichnet, daß die Einbringeinrichtung (III) entsprechend dem Strömungsprofil des vernetzbaren Produkts konzentrisch zu einem Kabel ausgebildet ist, über das das zu extrudierende Produkt zugegeben wird, wobei das Einbringen über einen Kranz (26, 27) dieses Profils durchgeführt wird.

**Claims**

1. A method for extruding continuously in a closed environment a cross-linked insulating material, which comprises the steps of passing a cross-linkable insulating material through a heated extrusion machine and of injecting a cross-linking agent into said insulating material in the upstream vicinity of the extrusion head, the mixture comprising the cross-linking agent being heated at a temperature near the maximum temperature admissible for the extrusion of said mixture with the view of ulteriorly cross-linking same, characterized in this that it comprises the following steps:
— passing the cross-linkable insulating material through the extrusion machine which is heated at a temperature near the maximum temperature admissible for said material, about 200°C, so as to bring said material to a state where it is as fluid as possible;
— filtering said cross-linkable material at said temperature;
— cooling the thus filtered material to a temperature slightly lower (about 150°C) than the reaction temperature of the cross-linking agent;
— injecting, after said cooling step, the cross-linking agent;
— conveniently mixing said cross-linkable material and said cross-linking agent; and
— elevating the temperature of the mixture to a temperature of about the maximum temperature admissible for the extrusion of said mixture with the view of ulteriorly cross-linking same.

2. A method according to claim 1, characterized in that a cross-linking retarding agent is initially added to said cross-linkable material.

3. A method according to claim 1, characterized in that a cross-linking retarding agent is initially added to said cross-linking agent.

4. A method according to claim 1, characterized in that said cross-linking agent is in solution in a carrying liquid.

5. A method according to any of claims 1 to 4, characterized in that said cross-linkable material is polyethylene.

6. A method according to any of claims 1 to 5, characterized in that said cross-linking agent is an organic peroxyde such as dicumyle peroxyde.

7. A method according to claim 4, characterized in that said carrying liquid is a paraffinic oil.

8. A device for extruding continuously a cross-linked insulating material for carrying out the method according to any of claims 1 to 7, which comprises a heated extrusion machine body, an extrusion head and an injecting device for injecting a cross-linking agent at the upstream vicinity of said extrusion head, the mixture comprising said cross-linking agent being heated at a temperature near the maximum temperature admissible for the extrusion of said mixture with the view of ulteriorly cross-linking same, characterized in that it comprises a filtering means (14) positioned adjacent the outlet end of said extrusion machine body (13), said cross-linking agent injecting device (15;III) being disposed between said filtering means and said extrusion head (17;IV), and a cooling means between said filtering means and said injection device, the temperatures of the different zones of the device being respectively adjusted so as the extrusion machine body is heated at a temperature near the maximum temperature admissible for the material, about 200°C, to thereby bring said material to a state as fluid as possible, so as the filtered material is cooled to a temperature slightly lower than the reaction temperature of the cross-linking agent, about 150°C.

9. A device according to claim 8, characterized in that it comprises a mixing means between said injection device and said extrusion head.

10. A device according to claim 9, characterized in that said mixing means is constituted by an auxiliary extrusion machine.

11. A device according to any of claims 8 and 9, characterized in that the injection device (III) is constituted by a contoured flow channel for the flow of the cross-linkable material which is disposed concentrically with respect to a cable onto which is to be applied the material to be extruded, the injection being made at least along an annulus (26, 27) of said contoured channel.

Fig: 1

Fig: 2

Fig: 3

Fig : 4

Fig : 5

Fig : 6